# EUROPÄISCHE PATENTSCHRIFT

(11) **EP 4 298 004 B1**
(45) Veröffentlichungstag und Bekanntmachung des Hinweises auf die Patenterteilung: **19.02.2025**
(21) Anmeldenummer: 22718885.1
(22) Anmeldetag: 28.03.2022
(51) Int. Cl.: B61L 15/00, B60L 3/10

(54) **VERFAHREN UND ANORDNUNG ZUR BESTIMMUNG DES BEWEGUNGSZUSTANDS EINES SCHIENENFAHRZEUG-RADS**
METHOD AND ASSEMBLY FOR DETERMINING THE MOVEMENT STATE OF A RAIL VEHICLE WHEEL
PROCÉDÉ ET DISPOSITIF DE DÉTERMINATION DE L'ÉTAT DE MOUVEMENT D'UNE ROUE DE VÉHICULE FERROVIAIRE

(30) Priorität: 23.04.2021 DE 102021204088
(43) Veröffentlichungstag der Anmeldung: 03.01.2024
(73) Patentinhaber: Siemens Mobility GmbH, 81739 München (DE)
(72) Erfinder: STOJANOVIC, Vladimir, 1100 Wien (AT); KNEIDINGER, Bernhard, 2013 Göllersdorf (AT); SCHANDL, Gerhard, 4060 Leonding (AT)
(74) Vertreter: Siemens Patent Attorneys
(86) Internationale Anmeldenummer: PCT/EP2022/058097
(87) Internationale Veröffentlichungsnummer: WO 2022/223241

(56) Entgegenhaltungen:
- JP-A- 2016 097 868
- JP-A- S57 170 001
- JP-A- S59 175 302

## Beschreibung

Die Erfindung betrifft ein Verfahren zur Bestimmung des Bewegungszustands eines Rads eines Schienenfahrzeugs in Bezug zur Schiene, die vom Rad des Schienenfahrzeugs befahren wird, sowie eine entsprechende Anordnung.

In der Eisenbahntechnik wird fachsprachlich unter dem Begriff "Schleudern" ein Durchdrehen eines Rads bzw. eines angetriebenen Rads auf einer Schiene verstanden. Beim Schleudern ist somit eine Umfangsgeschwindigkeit des Rads sehr viel größer als eine zugeordnete Fahrgeschwindigkeit des Schienenfahrzeugs.

Beim Schleudern ist das Reibungsverhältnis zwischen dem angetriebenen Rad und der Schiene zu gering, das angetriebene Rad dreht quasi "leer" durch, insbesondere an der Schiene entstehen Schäden durch einen erhöhten Materialabtrag.

Bei Schienenfahrzeugen sind sogenannte Schleuderschutz-Einrichtungen vorgesehen, die beim Anfahren des Schienenfahrzeugs durch eine kurzzeitige Zugkraftreduzierung das Schleudern verhindern sollen, um eine optimierte ZugkraftÜbertragung vom Antrieb des Schienenfahrzeugs auf die Schiene zu gewährleisten.

Unter dem Begriff "Gleiten" wird ein umdrehungsfreies Rutschen des Rads bzw. des gebremsten Rads auf der Schiene verstanden. Beim Gleiten ist somit die Umfangsgeschwindigkeit des Rads sehr viel kleiner als die zugeordnete Fahrgeschwindigkeit des Schienenfahrzeugs.

Beim Gleiten ist das Reibungsverhältnis zwischen einer auf das Rad wirkenden Bremse zu hoch, das gebremste Rad blockiert, insbesondere am Rad entstehen Schäden durch einen erhöhten Materialabtrag.

Bei Schienenfahrzeugen sind sogenannte Gleitschutz-Einrichtungen vorgesehen, die beim Bremsen des Schienenfahrzeugs durch eine kurzzeitige Bremskraftreduzierung das Gleiten verhindern sollen, um eine optimierte Bremskraft-Übertragung vom Bremssystem des Schienenfahrzeugs auf die Schiene zu gewährleisten.

Unter dem Begriff "Rollen" wird eine "normale" Drehbewegung des Rads verstanden, bei der beim operativen Betrieb, beim Anfahren und auch beim Bremsen die Umfangsgeschwindigkeit des Rads zumindest ungefähr der zugeordneten, jeweiligen Fahrgeschwindigkeit des Schienenfahrzeugs entspricht.

Zusammengefasst bilden Schleudern, Gleiten und Rollen drei Bewegungszustände des Rads des Schienenfahrzeugs.

Es sind verschiedene Systeme für einen Schleuderschutz bzw. für einen Gleitschutz bekannt, die auf Messungen von unterschiedlichen physikalischen Größen basieren und dazu Sensoren verwenden. Beispielsweise wird dazu die Winkelgeschwindigkeit des Rads über einen Tachogenerator bestimmt oder es wird das Drehmoment eines Antriebs über Messgrößen des zugehörigen Strom-/Spannungswandlers bestimmt.

Diese Systeme sind aufgrund der beschriebenen Messmethodik oft zu langsam und reagieren dadurch zu spät auf auftretende Probleme beim Antrieb bzw. beim Bremsen.

Aus der JP S 59175302 A ist eine optische Erkennung der Rutsch- und Gleitzustände eines Zuges bekannt.

Es ist daher die Aufgabe der vorliegenden Erfindung, ein verbessertes Verfahren sowie eine entsprechende Anordnung zur Bestimmung des Bewegungszustands eines Schienenfahrzeug-Rads anzugeben, das bei einem geringen zusätzlichen Aufwand eine reaktionsschnelle und zuverlässige Bestimmung des Betriebszustand ermöglicht.

Diese Aufgabe wird durch die Merkmale der unabhängigen Patentansprüche gelöst. Vorteilhafte Weiterbildungen sind in den Unteransprüchen angegeben.

Das erfindungsgemäße Verfahren ist Kamera-basiert und verwendet an sich bekannte bildverarbeitende Methoden, bzw. bildverarbeitende Algorithmen.

Beim erfindungsgemäßen Verfahren zur Bestimmung des Bewegungszustands eines Rads eines Schienenfahrzeugs in Bezug zur Schiene, die vom Rad des Schienenfahrzeugs befahren wird, werden mit einer Kamera, die am Schienenfahrzeug auf einen Rad-Schiene-Bereich fokussiert ist, als Bildfolge aufeinanderfolgende Bilder des Rad-Schiene-Bereichs aufgenommen. Der Rad-Schiene-Bereich beinhaltet zumindest einen Teilbereich eines Rads des Schienenfahrzeugs sowie zumindest einen Teilbereich einer vom Rad zu befahrenden Schiene.

In den Bildern wird ein Bereich ermittelt, längs dem sich die Teilbereiche des Rads und der Schiene berühren.

In einem ersten Bild der Bildfolge wird seitens des Teilbereichs der Schiene zumindest ein charakteristischer Punkt ermittelt, der im ersten Bild und in Bildern, die dem ersten Bild folgen, optisch eindeutig wiedererkennbar ist. Dieser Punkt ist dem Teilbereich der Schiene als Bestandteil zuordenbar. Entsprechend wird im ersten Bild seitens des Teilbereichs des Rads zumindest ein charakteristischer Punkt ermittelt, der im ersten Bild und in den Bildern, die dem ersten Bild folgen, optisch eindeutig wiedererkennbar ist. Dieser Punkt ist dem Teilbereich des Rads als Bestandteil zuordenbar.

Für aufeinanderfolgende Bilder werden jeweilige Abstände der charakteristischen Punkte zum Berührungsbereich bestimmt. Aus einer Abstandsänderung der charakteristischen Punkte zum Berührungsbereich, die sich über die aufeinanderfolgenden Bilder ergibt, wird der Bewegungszustand des Rads bestimmt.

In einer vorteilhaften Weiterbildung wird eine Gerade als Bereich ermittelt, längs der sich die Teilbereiche des Rads und der Schiene berühren.

In einer vorteilhaften Weiterbildung wird als Teilbereich der Schiene deren Schienenkopf durch die Kamera gefilmt und/oder wird als Teilbereich des Rads dessen Radlaufläche durch die Kamera gefilmt.

In einer vorteilhaften Weiterbildung wird als Kamera ein hochauflösendes Kamerasystem verwendet wird und/oder wird als Kamera ein System verwendet, das im Infrarotlicht-Bereich oder im Ultraviolettlicht-Bereich arbeitet.

In einer vorteilhaften Weiterbildung wird als Bewegungszustände des Rads entweder Rollen oder Gleiten oder Schleudern bestimmt.

Für den Fall, dass sich sowohl der Abstand zwischen dem Berührungsbereich und dem charakteristischer Punkt des Teilbereichs der Schiene als auch der Abstand zwischen dem Berührungsbereich und dem charakteristischer Punkt des Teilbereichs des Rads gleichmäßig und gleichgerichtet verändern, wird als Bewegungszustands des Rads "Rollen" bestimmt.

Für den Fall, dass sich der Abstand zwischen dem Berührungsbereich und dem charakteristischen Punkt des Teilbereichs des Rads verändert, während der Abstand zwischen dem Berührungsbereich und dem charakteristischer Punkt des Teilbereichs der Schiene im Wesentlichen unverändert bleibt, wird als Bewegungszustands des Rads "Schleudern" bestimmt.

Für den Fall, dass sich der Abstand zwischen dem Berührungsbereich und dem charakteristischen Punkt des Teilbereichs der Schiene verändert, während der Abstand zwischen dem Berührungsbereich und dem charakteristischen Punkt des Teilbereichs der Schiene im Wesentlichen unverändert bleibt, wird als Bewegungszustands des Rads "Gleiten" bestimmt.

In einer vorteilhaften Weiterbildung werden sowohl seitens des Teilbereichs der Schiene als auch seitens des Teilbereichs des Rads eine Vielzahl an charakteristischen Punkten verwendet, um über jeweilige Abstandsänderungen zum Berührungsbereich die Analyse des Bewegungszustands zu verfeinern und um entsprechend fein abgestimmte Gegenregulierungen zum Schleudern bzw. Gleiten beim Schienenfahrzeug einzuleiten.

In einer vorteilhaften Weiterbildung wird eine Information bezüglich der ermittelten Betriebsart an eine Antriebsregelung des Schienenfahrzeugs und/oder an eine Bremsregelung des Schienenfahrzeugs übertragen, um beim Schienenfahrzeug eine jeweilige Gegenregulierung zu veranlassen.

In einer vorteilhaften Weiterbildung wird durch die Antriebsregelung des Schienenfahrzeugs bei erkanntem Schleudern am Schienenfahrzeug eine Zugkraftreduzierung vorgenommen, um dem Schleudern zumindest entgegenzuwirken. Entsprechend wird durch die Bremsregelung des Schienenfahrzeugs bei erkanntem Gleiten am Schienenfahrzeug eine Zugkraftreduzierung vorgenommen, um dem Gleiten zumindest entgegenzuwirken.

In einer vorteilhaften Weiterbildung werden die Kamerabilder zur Überwachung und/oder zur Bewertung eines Schienenzustands einer Schienenstrecke verwendet.

In einer vorteilhaften Weiterbildung werden als charakteristische Punkte Beschädigungen, Oberflächenänderungen, Oberflächenverfärbungen und/oder Strukturen am Teilbereich der Schiene bzw. des Rads verwendet.

In einer vorteilhaften Weiterbildung werden als charakteristische Punkte Markierungen verwendet, die am Teilbereich der Schiene bzw. am Teilbereich des Rads angebracht sind.

Das erfindungsgemäße Verfahren ermöglicht, sowohl Schleudern als auch Gleiten eines angetriebenen oder abgebremsten Rads sehr schnell, zuverlässig und präzise festzustellen.

Durch das erfindungsgemäße Verfahren wird ermöglicht, sowohl beim Rad, genauer bei der Radlauffläche, als auch bei der Schiene, genauer beim Schienenkopf, Verschleiß zu reduzieren bzw. diesen gänzlich zu verhindern.

Das erfindungsgemäße Verfahren ermöglicht eine Verbesserung bzw. Optimierung einer Antriebsregelung bzw. einer Bremsregelung, mit denen das Schienenfahrzeug im Betrieb beaufschlagt ist.

Das erfindungsgemäße Verfahren ermöglicht eine aktuelle oder auch eine nachträglich erfolgende Visualisierung und Auswertung von Rad-Bewegungszuständen längs einer Schiene bzw. Bahnstrecke sowie eine Auswertung des Streckenzustands.

Durch das erfindungsgemäße Verfahren werden bislang erforderliche Betriebsmittel, beispielsweise Sand oder Druckluft einer Anfahr-Hilfseinrichtung des Schienenfahrzeugs, eingespart. Damit wird auch umweltschonender Betrieb des Schienenfahrzeugs unterstützt bzw. ermöglicht.

Das erfindungsgemäße Verfahren ist unabhängig von der Tageszeit und auch bei schlechten Wetterverhältnissen zuverlässig einsetzbar.

Erreicht wird dies beispielsweise durch eine geeignete Wahl des verwendeten Kamerasystems (z.B. durch dessen Auflösung) und des zur Beobachtung verwendeten Wellenlängenbereichs (Infrarotlicht, ultraviolettes Licht), in dem das Kamerasystem arbeitet.

Durch das erfindungsgemäße Verfahren werden Wartungsintervalle für eine Reprofilierung der Radscheiben verlängert. Zugleich wird die Abnutzung der Infrastruktur verringert, insbesondere in Bahnhöfen und an Streckensteigungen.

Nachfolgend wird die Erfindung anhand einer Zeichnung näher erläutert. Dabei zeigt:
- FIG 1: das erfindungsgemäße Arbeitsprinzip der Erfindung in einer Übersicht,
- FIG 2: zeigt mit Bezug auf FIG 1 eine Konturextraktion zur Bestimmung einer Geraden,
- FIG 3: zeigt mit Bezug auf FIG 1 und FIG 2 eine Bestimmung von charakteristischen Punkten,
- FIG 4: mit Bezug auf FIG 3 eine Bestimmung von Abständen der charakteristischen Punkte zur Geraden,
- FIG 5: mit Bezug auf die vorhergehenden Figuren das erfindungsgemäße Verfahren in einem Ablaufdiagramm,
- FIG 6: in einer Prinzipdarstellung die Verwendung der Kamerabilder, die im Rahmen der Erfindung gemacht werden,
- FIG 7: zum erfindungsgemäßen Verfahren ein Schienenfahrzeug mit einer Anordnung der Kameras.

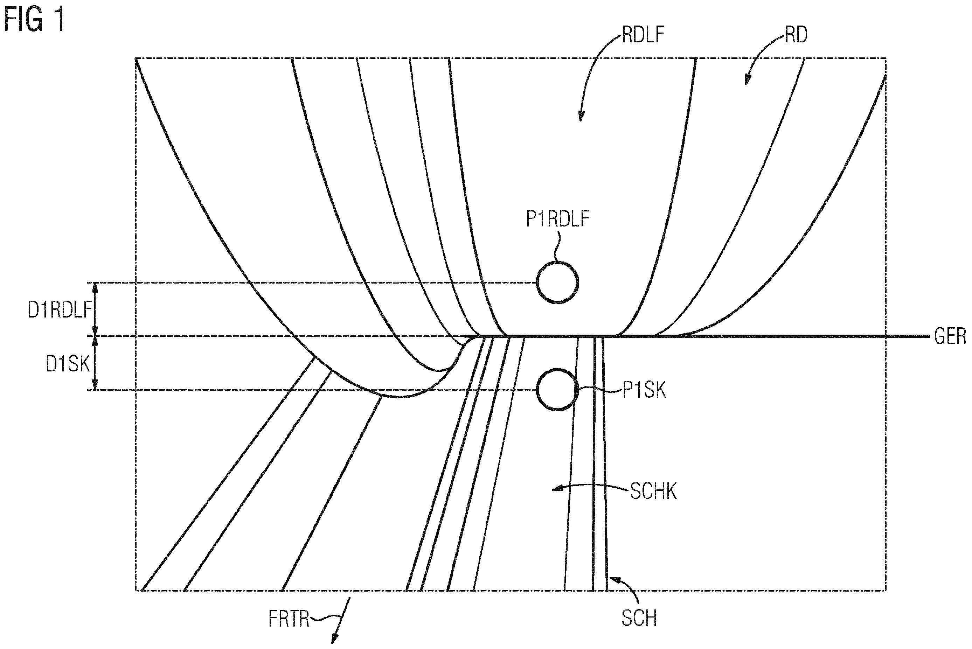

FIG 1 zeigt das erfindungsgemäße Arbeitsprinzip der Erfindung in einer Übersicht.

Ein Schienenfahrzeug wird mit einer Kamera, bevorzugt einer hochauflösenden Kamera, ausgerüstet, die auf einen Rad-Schiene-Bereich gerichtet bzw. fokussiert wird.

In diesem Bereich ist zumindest ein Teilbereich eines Rads RD des Schienenfahrzeugs sowie zumindest ein Teilbereich einer vom Rad zu befahrenden Schiene SCH zu sehen.

Bevorzugt wird von der Kamera in aufeinanderfolgenden Bildern eine Radlauffläche RDLF als Teilbereich des Rads RD erfasst, während ein Schienenkopf SCHK als Teilbereich der Schiene SCH erfasst wird.

In aufeinanderfolgenden Bildern der Kamera wird mit Hilfe einer Kamera- oder Auswerte-Elektronik zwischen dem Schienenkopf SCHK und der Radlauffläche RDLF eine Gerade GER ermittelt, längs der sich die beiden berühren.

In aufeinanderfolgenden Bildern der Kamera wird mit Hilfe der Auswerte-Elektronik auf dem Schienenkopf SCHK ein charakteristischer Punkt P1SK ermittelt. Entsprechend wird auf der Radlauffläche RDLF ein charakteristischer Punkt P1RDLF ermittelt.

Als charakteristische Punkte P1SK, P1RDLF werden optisch erkennbare und eindeutig zuordenbare Punkte verwendet. Beispielsweise handelt es sich dabei um erkennbare Beschädigungen, Oberflächenänderungen, Oberflächenverfärbungen, etc., am Schienenkopf SCHK bzw. an der Radlauffläche RDLF.

Alternativ oder ergänzend hierzu werden als charakteristische Punkte eigens dazu vorgesehene Markierungen verwendet, die am Schienenkopf SCHK bzw. an der Radlauffläche RDLF angebracht sind.

In aufeinanderfolgenden Bildern der Kamera wird mit Hilfe der Auswerte-Elektronik zwischen dem charakteristischen Punkt P1SK und der Geraden GER ein Abstand D1SK ermittelt. Entsprechend wird zwischen dem charakteristischen Punkt P1RDLF und der Geraden GER ein Abstand D1RDLF ermittelt.

Diese Abstände D1SK, D1RDLF verändern sich in Abhängigkeit vom Bewegungszustand des Rads RD des Schienenfahrzeugs.

Bei einer Radbewegung in Fahrtrichtung FRTR
- werden sich beim Rollen die beiden Abstände D1SK, D1RDLF gleichmäßig verringern,
- wird sich beim Schleudern (also beim durchdrehenden Rad RD) der Abstand D1RDLF verringern, während der Abstand D1SK im Wesentlichen gleichbleiben wird, und
- wird beim Gleiten (also beim blockierten Rad RD) der Abstand D1RDLF im Wesentlichen gleichbleiben, während sich der Abstand D1SK verringern wird.

Durch eine Analyse der aufeinanderfolgenden Bilder wird so auf den Bewegungszustand des Rads RD des Schienenfahrzeugs geschlossen bzw. dieser ermittelt.

Die oben genannte Untersuchung bzw. Bewertung der Abstandsänderung wird innerhalb vorgegebener Toleranzen vorgenommen, so dass im operativen Betrieb des Schienenfahrzeugs vorkommende, eher geringfügige, Abweichungen bei den Abstands-Änderungen das Bewertungsergebnis nicht verfälschen.

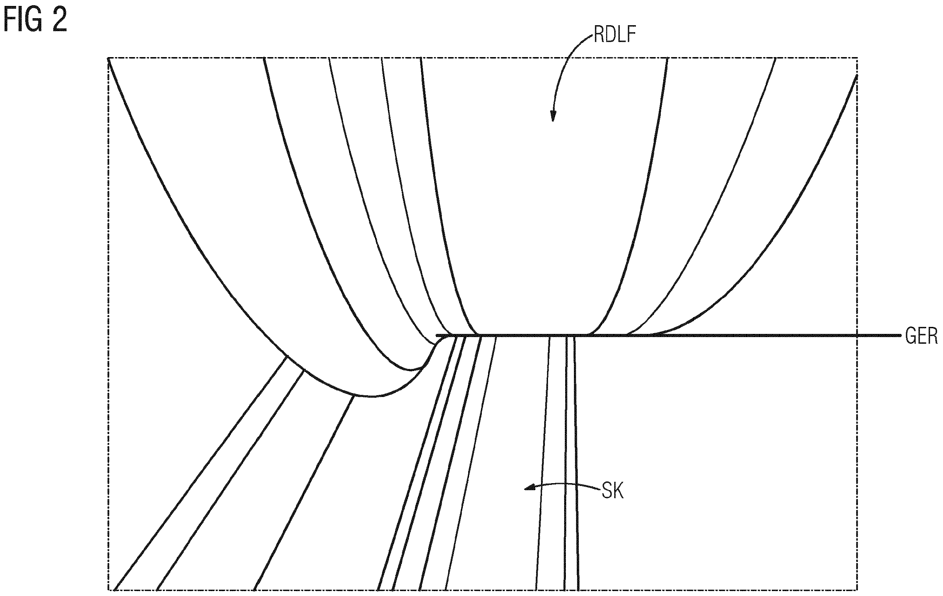

FIG 2 zeigt mit Bezug auf FIG 1 eine Konturextraktion, deren Ergebnis die Gerade GER zwischen der Radlauffläche RDLF und dem Schienenkopf SK ist.

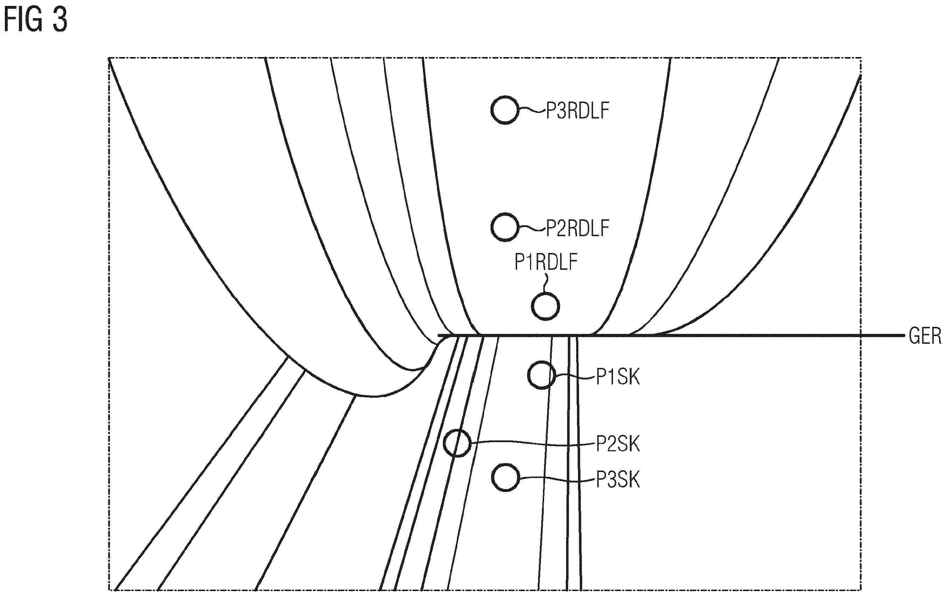

FIG 3 zeigt mit Bezug auf die Figuren FIG 1, FIG 2 eine Bestimmung bzw. eine Extraktion von charakteristischen Punkten P1SK, P2SK, P3SK sowie P1RDLF, P2RDLF, P3RDLF.

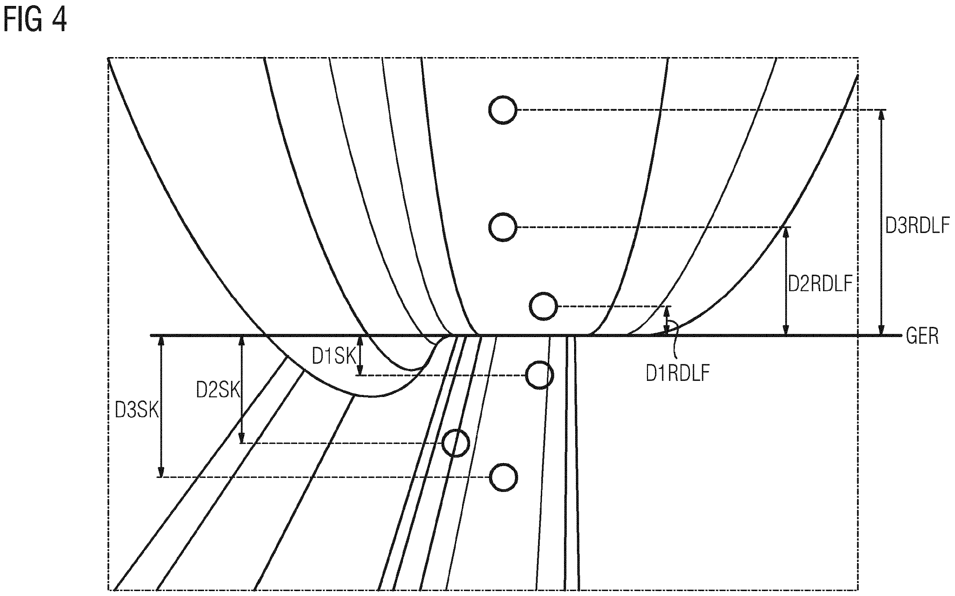

FIG 4 zeigt mit Bezug auf FIG 3 die den charakteristischen Punkten P1SK, P2SK, P3SK sowie P1RDLF, P2RDLF, P3RDLF zugeordneten Abstände D1SK, D2SK, D3SK sowie D1RDLF, D2RDLF, D3RDLF zur Geraden GER.

Durch die in FIG 3 und in FIG 4 gezeigte Verwendung einer Vielzahl an charakteristischen Punkten bzw. der zugehörigen Analyse der entsprechenden Abstandsänderungen wird die Analyse des Bewegungszustands verfeinert und genauere Ergebnisse zum Ausmaß des Schleuderns bzw. Gleitens ermittelt.

Damit wird eine entsprechend fein abgestimmte Gegenregulierung ermöglicht, um das Schleudern bzw. Gleiten zu reduzieren oder gänzlich zu verhindern.

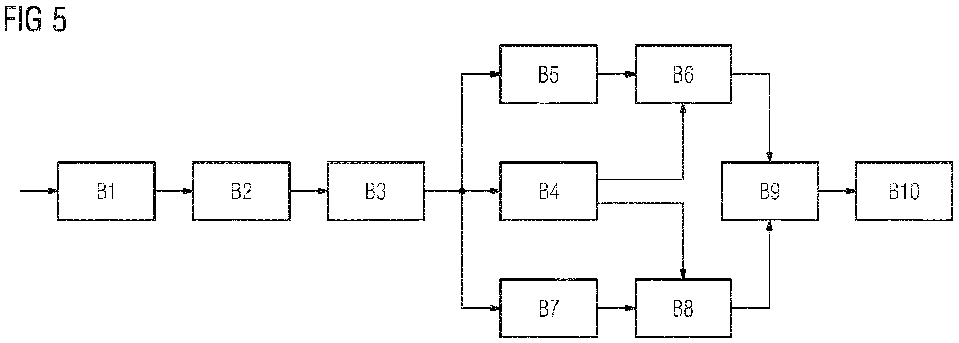

FIG 5 zeigt mit Bezug auf die vorhergehenden Figuren das erfindungsgemäße Verfahren in einem Ablaufdiagramm bzw. anhand einer zugeordneten Software-Architektur.

In einem ersten Block B1 werden mit Hilfe einer hochauflösenden Kamera aufeinanderfolgende Kamerabilder generiert, auf denen der Rad-Schiene-Bereich zu sehen ist.

In einem zweiten Block B2 werden diese Bilder vorverarbeitet und in einem dritten Block B3 klassifiziert, d.h. einem jeweiligen überwachten Rad des Schienenfahrzeugs zugeordnet.

In einem vierten Block B4 erfolgt eine Konturextraktion, um die Gerade zu bestimmen, längs der sich das Rad (Radlauffläche) und die Schiene (Schienenkopf) berühren.

In einem fünften Block B5 erfolgt eine Extraktion bzw. Bestimmung von einem oder mehreren charakteristischen Punkten am Rad bzw. an der Radlauffläche.

In einem sechsten Block B6 wird der Abstand der charakteristischen Punkte des Rads bzw. der Radlauffläche zur Geraden bestimmt.

In einem siebten Block B7 erfolgt eine Extraktion bzw. Bestimmung von einem oder mehreren charakteristischen Punkten an der Schiene bzw. am Schienenkopf.

In einem achten Block B8 wird der Abstand der charakteristischen Punkte der Schiene bzw. des Schienenkopfs zur Geraden bestimmt.

In einem neunten Block B9 werden die Abstandsänderungen der jeweiligen charakteristischen Punkte zur Geraden bestimmt und auf eine Betriebsart des Rads geschlossen.

In einem zehnten Block B10 wird eine Information bezüglich der ermittelten Betriebsart an eine Antriebssteuerung des Schienenfahrzeugs und/oder an eine Bremssteuerung des Schienenfahrzeugs gegeben.

Durch die Antriebssteuerung wird im Fall eines detektierten Schleuderns des Rads eine zeitlich begrenzte Zugkraftreduzierung beim Schienenfahrzeug initiiert, um das Schleudern zu reduzieren bzw. zu unterbinden.

Durch die Bremssteuerung wird im Fall eines detektierten Gleitens des Rads eine zeitlich begrenzte Bremskraftreduzierung beim Schienenfahrzeug initiiert, um das Gleiten zu reduzieren bzw. zu unterbinden.

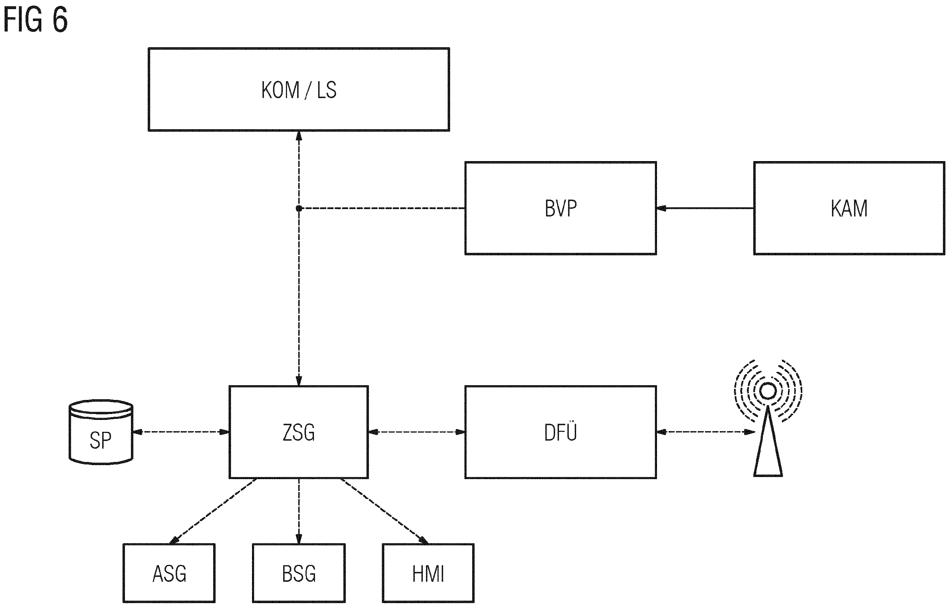

FIG 6 zeigt in einer Prinzipdarstellung die Verwendung der Kamerabilder, die im Rahmen der Erfindung gemacht werden.

Die mit Hilfe der Kamera KAM erzeugten hochauflösenden Bilder werden einem Bildverarbeitungsprogramm BVP zugeführt, dort analysiert und die Betriebsart des Rads ermittelt.

In einer bevorzugten Weiterbildung wird mit dem Bildverarbeitungsprogramm BVP über die Bilder ein Zustand der Schienen ermittelt bzw. detektiert.

Die Kamerabilder, die Betriebsart und/oder die Schienenzustandsinformation werden bevorzugt einer landseitigen Leistelle LS oder einer Kommunikationsplattform KOM, beispielsweise einer RAILIGENT-Plattform, zur weiteren Bearbeitung zugeführt.

In einer bevorzugten Weiterbildung werden die Kamerabilder, die Betriebsart und/oder die Schienenzustandsinformation einem zentralen Zugsteuergerät ZSG des Schienenfahrzeugs zugeführt.

Das zentrale Zugsteuergerät ZSG veranlasst in einer bevorzugten Weiterbildung über eine Datenfernübertragung DFÜ des Schienenfahrzeugs eine funkgesteuerte Weitergabe zur weiteren Bearbeitung.

Das zentrale Zugsteuergerät ZSG veranlasst in einer bevorzugten Weiterbildung über einen Speicher SP des Schienenfahrzeugs deren Dokumentation.

Das zentrale Zugsteuergerät ZSG veranlasst in einer bevorzugten Weiterbildung über eine Antriebssteuerung ASG oder über eine Bremssteuerung BSG die oben genannten Gegenmaßnahmen, um dem Schleudern bzw. dem Gleiten zu begegnen.

Das zentrale Zugsteuergerät ZSG führt in einer bevorzugten Weiterbildung über eine Anzeigeeinheit HMI eine Information des Triebfahrzeugführers des Schienenfahrzeugs durch.

Diese Information betrifft bevorzugt die ermittelte Betriebsart des Rads und/oder geeignete Gegenmaßnahmen, die der Triebfahrzeugführer veranlassen soll.

Diese Information enthält in einer bevorzugten Weiterbildung eine Mitteilung über automatisiert getroffene und bereits durchgeführte Gegenmaßnahmen, um den Triebfahrzeugführer zur Antriebs- bzw. Bremssituation zu informieren.

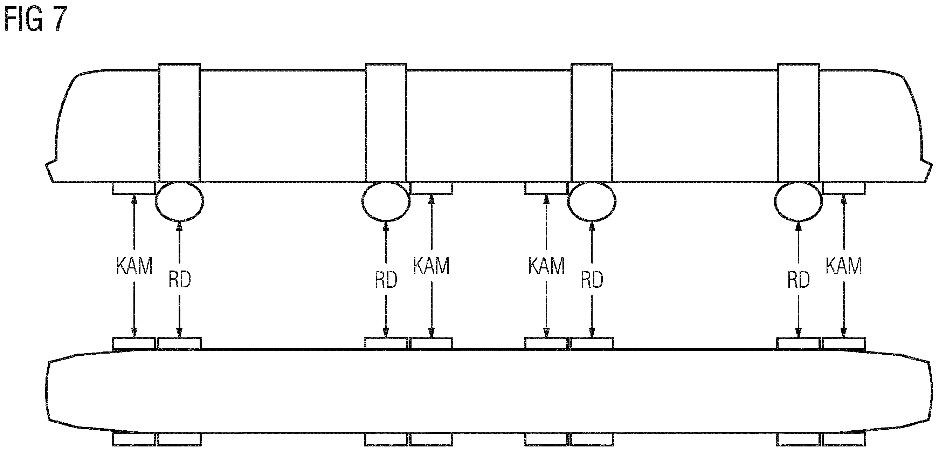

FIG 7 zeigt zum erfindungsgemäßen Verfahren ein Schienenfahrzeug SFZ sowie eine vorteilhafte Anordnung der beim erfindungsgemäßen Verfahren verwendeten Kameras KAM, die wie hier gezeigt, bei jedem einzelnen Rad RD jeweils einzeln angeordnet sind.

## Patentansprüche

1. Verfahren zur Bestimmung des Bewegungszustands eines Rads (RD) eines Schienenfahrzeugs (SFZ) in Bezug zur Schiene (SCH), die vom Rad (RD) des Schienenfahrzeugs (SFZ) befahren wird,
- bei dem mit einer Kamera (KAM), die am Schienenfahrzeug (SFZ) auf einen Rad-Schiene-Bereich fokussiert ist, als Bildfolge aufeinanderfolgende Bilder des Rad-Schiene-Bereichs aufgenommen werden, wobei der Rad-Schiene-Bereich zumindest einen Teilbereich (RDLF) eines Rads (RD) des Schienenfahrzeugs (SFZ) sowie zumindest einen Teilbereich (SK) einer vom Rad (RD) zu befahrenden Schiene (SCH) beinhaltet,
- bei dem in den Bildern ein Bereich (GER) als Berührungsbereich (GER) ermittelt wird, längs dem sich der Teilbereich (RDLF) des Rads (RD) und der Teilbereich (SK) der Schiene (SCH) berühren,
- bei dem in einem ersten Bild der Bildfolge seitens des Teilbereichs (SK) der Schiene (SCH) zumindest ein charakteristischer Punkt (P1SK) ermittelt wird, der im ersten Bild und in Bildern, die dem ersten Bild folgen, optisch eindeutig wiedererkennbar ist,
- bei dem im ersten Bild seitens des Teilbereichs (RDLF) des Rads (RD) zumindest ein charakteristischer Punkt (P1RDLF) ermittelt wird, der im ersten Bild und in den Bildern, die dem ersten Bild folgen, optisch eindeutig wiedererkennbar ist,
- bei dem seitens des Teilbereichs (SK) der Schiene (SCH) für die aufeinanderfolgenden Bilder jeweilige Abstände (D1SK) der charakteristischen Punkte (P1SK) zum Berührungsbereich (GER) bestimmt werden,
- bei dem seitens des Teilbereichs (RDLF) des Rads (RD) für die aufeinanderfolgenden Bilder jeweilige Abstände (D1RDLF) der charakteristischen Punkte (P1RDLF) zum Berührungsbereich (GER) bestimmt werden,
- bei dem aus einer Abstandsänderung (D1SK, D1RDLF) der charakteristischen Punkte (P1SK, P1RDLF) zum Berührungsbereich (GER), die sich über die aufeinanderfolgenden Bilder ergibt, der Bewegungszustand des Rads (RD) bestimmt wird.

2. Verfahren nach Anspruch 1, bei dem eine Gerade (GER) als Bereich (GER) ermittelt wird, längs der sich die Teilbereiche (RDLF, SK) des Rads (RD) und der Schiene (SCH) berühren.

3. Verfahren nach Anspruch 1 oder 2,
- bei dem als Teilbereich der Schiene (SCH) deren Schienenkopf (SK) durch die Kamera (KAM) gefilmt wird, und/oder
- bei dem als Teilbereich des Rads (RD) dessen Radlaufläche (RDLF) durch die Kamera (KAM) gefilmt wird.

4. Verfahren nach Anspruch 1,
- bei dem als Kamera (KAM) ein hochauflösendes Kamerasystem verwendet wird, und/oder
- bei dem als Kamera (KAM) ein System verwendet wird, das im Infrarotlicht-Bereich oder im Ultraviolettlicht-Bereich arbeitet.

5. Verfahren nach Anspruch 1, bei dem als Bewegungszustände des Rads entweder Rollen oder Gleiten oder Schleudern bestimmt wird.

6. Verfahren nach Anspruch 5, bei dem für den Fall, dass sich sowohl der Abstand (D1SK) zwischen dem Berührungsbereich (GER) und dem charakteristischen Punkt (P1SK) des Teilbereichs (SK) der Schiene (SCH) als auch der Abstand (D1RDLF) zwischen dem Berührungsbereich (GER) und dem charakteristischen Punkt (P1RDLF) des Teilbereichs (RDLF) des Rads (RD) gleichmäßig und gleichgerichtet verändern, als Bewegungszustands des Rads (RD) Rollen bestimmt wird.

7. Verfahren nach Anspruch 5, bei dem für den Fall, dass sich der Abstand (D1RDLF) zwischen dem Berührungsbereich (GER) und dem charakteristischen Punkt (P1RDLF) des Teilbereichs (RDLF) des Rads verändert, während der Abstand (D1SK) zwischen dem Berührungsbereich (GER) und dem charakteristischen Punkt (P1SK) des Teilbereichs (SK) der Schiene (SCH) im Wesentlichen unverändert bleibt, als Bewegungszustands des Rads (RD) Schleudern bestimmt wird.

8. Verfahren nach Anspruch 5, bei dem für den Fall, dass sich der Abstand (D1SK) zwischen dem Berührungsbereich (GER) und dem charakteristischen Punkt (P1SK) des Teilbereichs (SK) der Schiene (SCH) verändert, während der Abstand (D1RDLF) zwischen dem Berührungsbereich (GER) und dem charakteristischen Punkt (P1RDLF) des Teilbereichs (RDLF) der Schiene (SCH) im Wesentlichen unverändert bleibt, als Bewegungszustands des Rads (RD) Gleiten bestimmt wird.

9. Verfahren nach einem der vorhergehenden Ansprüche, bei dem sowohl seitens des Teilbereichs (SK) der Schiene (SCH) als auch seitens des Teilbereichs (RDLF) des Rads (RD) eine Vielzahl an charakteristischen Punkten (P1SK, P2SK, P3SK, P1RDLF, P2RDLF, P3RDLF) verwendet wird, um über jeweilige Abstandsänderungen (D1SK, D2SK, D3SK, D1RDLF, D2RDLF, D3RDLF) zum Berührungsbereich (GER) die Analyse des Bewegungszustands zu verfeinern und um entsprechend fein abgestimmte Gegenregulierungen zum Schleudern bzw. Gleiten beim Schienenfahrzeug einzuleiten.

10. Verfahren nach einem der vorhergehenden Ansprüche, bei dem eine Information bezüglich der ermittelten Betriebsart an eine Antriebsregelung des Schienenfahrzeugs und/oder an eine Bremsregelung des Schienenfahrzeugs übertragen wird, um beim Schienenfahrzeug eine jeweilige Gegenregulierung zu veranlassen.

11. Verfahren nach Anspruch 10,
- bei dem durch die Antriebsregelung des Schienenfahrzeugs bei erkanntem Schleudern am Schienenfahrzeug eine Zugkraftreduzierung vorgenommen wird, um dem Schleudern zumindest entgegenzuwirken, oder
- bei dem durch die Bremsregelung des Schienenfahrzeugs bei erkanntem Gleiten am Schienenfahrzeug eine Zugkraftreduzierung vorgenommen wird, um dem Gleiten zumindest entgegenzuwirken.

12. Verfahren nach Anspruch 1, bei dem die Kamerabilder zur Überwachung und/oder zur Bewertung eines Schienenzustands einer Schienenstrecke verwendet werden.

13. Verfahren nach einem der vorhergehenden Ansprüche, bei dem als charakteristische Punkte (P1SK, P1RDLF)
- Beschädigungen, Oberflächenänderungen, Oberflächenverfärbungen und/oder Strukturen am Teilbereich (RDLF) der Schiene (SCH) bzw. des Rads (RD) verwendet werden, oder
- Markierungen verwendet werden, die am Teilbereich (SK) der Schiene (SCH) bzw. am Teilbereich (RDLF) des Rads (RD) angebracht sind.

14. Anordnung zur Bestimmung des Bewegungszustands eines Rads (RD) eines Schienenfahrzeugs (SFZ),
- mit einem Rad (RD) eines Schienenfahrzeugs (SFZ) und mit einer Schiene (SCH), die vom Rad (RD) des Schienenfahrzeugs (SFZ) befahren wird,
- mit einer Kamera (KAM), die am Schienenfahrzeug (SFZ) angeordnet und auf einen Rad-Schiene-Bereich fokussiert ist,
- bei der die Kamera derart ausgebildet ist, dass als Bildfolge aufeinanderfolgende Bilder des Rad-Schiene-Bereichs aufgenommen werden, wobei der Rad-Schiene-Bereich zumindest einen Teilbereich (RDLF) eines Rads (RD) des Schienenfahrzeugs (SFZ) sowie zumindest einen Teilbereich (SK) einer vom Rad (RD) zu befahrenden Schiene (SCH) beinhaltet,
- und mit Mitteln zur Bildanalyse, die zur Durchführung des Verfahrens nach einem der Ansprüche 1 bis 13 ausgebildet sind.

## Claims

1. Method for determining the movement state of a wheel (RD) of a rail vehicle (SFZ) with respect to the rail (SCH) traversed by the wheel (RD) of the rail vehicle (SFZ),
- wherein a camera (KAM) focused on a wheel-rail region on the rail vehicle (SFZ) is used to capture, as an image sequence, successive images of the wheel-rail region, wherein the wheel-rail region contains at least a sub-region (RDLF) of a wheel (RD) of the rail vehicle (SFZ) as well as at least a sub-region (SK) of a rail (SCH) to be traversed by the wheel (RD),
- wherein a region (GER), as a contact region (GER), is ascertained in the images, along which the sub-region (RDLF) of the wheel (RD) and the sub-region (SK) of the rail (SCH) are in contact,
- wherein in a first image of the image sequence of the sub-region (SK) of the rail (SCH) at least a characteristic point (PlSK) is ascertained which is clearly optically recognizable in the first image and in images which follow the first image,
- wherein in the first image of the sub-region (RDLF) of the wheel (RD) at least one characteristic point (PlRDLF) is ascertained which is clearly optically recognizable in the first image and in the images which follow the first image,
- wherein for the successive images of the sub-region (SK) of the rail (SCH), respective distances (DlSK) of the characteristic points (PlSK) from the contact region (GER) are determined,
- wherein for the successive images of the sub-region (RDLF) of the wheel (RD), respective distances (DlRDLF) of the characteristic points (PlRDLF) from the contact region (GER) are determined,
- wherein the movement state of the wheel (RD) is determined from a change in the distance (DlSK, DlRDLF) of the characteristic points (PlSK, PlRDLF) from the contact region (GER), which results from the successive images.

2. Method according to Claim 1 wherein a straight line (GER) is ascertained as the region (GER) along which the sub-regions (RDLF, SK) of the wheel (RD) and the rail (SCH) are in contact.

3. Method according to Claim 1 or 2,
- wherein the rail head (SK) of the rail (SCH) is filmed by the camera (KAM) as the sub-region of the rail (SCH), and/or
- wherein the wheel running surface (RDLF) of the wheel (RD) is filmed by the camera (KAM) as the sub-region of the wheel (RD) .

4. Method according to Claim 1,
- wherein a high-resolution camera system is used as the camera (KAM), and/or
- wherein a system that operates in the infrared light range or in the ultraviolet light range is used as the camera (KAM).

5. Method according to Claim 1 wherein either rolling or sliding or skidding is determined as the movement state of the wheel.

6. Method according to Claim 5, wherein for the case in which both the distance (DlSK) between the contact region (GER) and the characteristic point (PlSK) of the sub-region (SK) of the rail (SCH) and the distance (DlRDLF) between the contact region (GER) and the characteristic point (PlRDLF) of the sub-region (RDLF) of the wheel (RD) change equally and in the same direction, rolling is determined as the movement state of the wheel (RD).

7. Method according to Claim 5, wherein for the case in which the distance (DlRDLF) between the contact region (GER) and the characteristic point (PlRDLF) of the sub-region (RDLF) of the wheel changes, whereas the distance (DlSK) between the contact region (GER) and the characteristic point (PlSK) of the sub-region (SK) of the rail (SCH) remains essentially unchanged, skidding is determined as the movement state of the wheel (RD).

8. Method according to Claim 5, wherein for the case in which the distance (DlSK) between the contact region (GER) and the characteristic point (PlSK) of the sub-region (SK) of the rail (SCH) changes, whereas the distance (DlRDLF) between the contact region (GER) and the characteristic point (PlRDLF) of the sub-region (RDLF) of the rail (SCH) remains essentially unchanged, sliding is ascertained as the movement state of the wheel (RD).

9. Method according to any one of the preceding claims, wherein a plurality of characteristic points (PlSK, P2SK, P3SK, PlRDLF, P2RDLF, P3RDLF) are used both for the sub-region (SK) of the rail (SCH) and for the sub-region (RDLF) of the wheel (RD) in order to refine the analysis of the movement state over respective changes in distance (DlSK, D2SK, D3SK, DlRDLF, D2RDLF, D3RDLF) from the contact region (GER) and in order to initiate correspondingly finely tuned counter-adjustments for skidding or sliding of the rail vehicle.

10. Method according to any one of the preceding claims, wherein information about the ascertained operating mode is transmitted to a drive control system of the rail vehicle and/or to a brake control system of the rail vehicle in order to initiate a corresponding counter-adjustment of the rail vehicle.

11. Method according to Claim 10,
- wherein a traction force reduction is carried out by the drive control system of the rail vehicle when skidding is detected on the rail vehicle in order to at least counteract the skidding, or
- wherein a traction force reduction is carried out by the brake control system of the rail vehicle when sliding is detected on the rail vehicle in order to at least counteract the sliding.

12. Method according to Claim 1, wherein the camera images are used for monitoring and/or for assessing a rail condition of a railway line.

13. Method according to any one of the preceding claims, wherein
- damage, surface changes, surface discoloration and/or structures on the sub-region (RDLF) of the rail (SCH) or of the wheel (RD), or
- markings that are attached to the sub-region (SK) of the rail (SCH) or to the sub-region (RDLF) of the wheel (RD) are used as the characteristic points (PlSK, PlRDLF).

14. Arrangement for determining the movement state of a wheel (RD) of a rail vehicle (SFZ),
- with a wheel (RD) of a rail vehicle (SFZ) and with a rail (SCH) that is traversed by the wheel (RD) of the rail vehicle (SFZ),
- with a camera (KAM) arranged on the rail vehicle (SFZ) and focused on a wheel-rail region,
- wherein the camera is designed in such a way that, as an image sequence, successive images of the wheel-rail region are recorded, wherein the wheel-rail region contains at least one sub-region (RDLF) of a wheel (RD) of the rail vehicle (SFZ) and at least one sub-region (SK) of a rail (SCH) to be traversed by the wheel (RD),
- and with means for image analysis designed to carry out the method according to any one of Claims 1 to 13.

## Revendications

1. Procédé de détermination de l'état de mouvement d'une roue (RD) d'un véhicule ferroviaire (SFZ) par rapport au rail (SCH) sur lequel circule la roue (RD) du véhicule ferroviaire (SFZ),
- dans lequel des images successives de la zone roue-rail sont enregistrées sous forme de séquence d'images par une caméra (KAM) qui est focalisée sur une zone roue-rail sur le véhicule ferroviaire (SFZ), la zone roue-rail contenant au moins une zone partielle (RDLF) d'une roue (RD) du véhicule ferroviaire (SFZ) ainsi qu'au moins une zone partielle (SK) d'un rail (SCH) sur lequel doit rouler la roue (RD),
- dans lequel on détermine dans les images une zone (GER) comme zone de contact (GER) le long de laquelle la zone partielle (RDLF) de la roue (RD) et la zone partielle (SK) du rail (SCH) se touchent,
- dans lequel on détermine dans une première image de la séquence d'images, du côté de la zone partielle (SK) du rail (SCH), au moins un point caractéristique (P1SK) qui est reconnaissable optiquement sans équivoque dans la première image et dans des images qui suivent la première image,
- dans lequel on détermine dans la première image, du côté de la zone partielle (RDLF) de la roue (RD), au moins un point caractéristique (P1RDLF) qui est reconnaissable optiquement sans équivoque dans la première image et dans les images qui suivent la première image,
- dans lequel, du côté de la zone partielle (SK) du rail (SCH), on détermine pour les images successives des distances respectives (D1SK) des points caractéristiques (P1SK) par rapport à la zone de contact (GER),
- dans lequel, du côté de la zone partielle (RDLF) de la roue (RD), on détermine pour les images successives des distances respectives (D1RDLF) des points caractéristiques (P1RDLF) par rapport à la zone de contact (GER),
- dans lequel l'état de mouvement de la roue (RD) est déterminé à partir d'une variation de distance (D1SK, D1RDLF) des points caractéristiques (P1SK, P1RDLF) par rapport à la zone de contact (GER), qui est obtenue sur les images successives.

2. Procédé selon la revendication 1, dans lequel une droite (GER) est déterminée comme zone de contact (GER) le long de laquelle les zones partielles (RDLF, SK) de la roue (RD) et du rail (SCH) se touchent.

3. Procédé selon la revendication 1 ou 2,
- dans lequel, en tant que zone partielle du rail (SCH) son champignon de rail (SK) est filmé par la caméra (KAM), et/ou
- dans lequel, en tant que zone partielle de la roue (RD), sa surface de roulement (RDLF) est filmée par la caméra (KAM).

4. Procédé selon la revendication 1,
- dans lequel on utilise comme caméra (KAM) un système de caméra à haute résolution, et/ou
- dans lequel on utilise comme caméra (KAM) un système fonctionnant dans le spectre de lumière infrarouge ou de lumière ultraviolette.

5. Procédé selon la revendication 1, dans lequel on détermine comme états de mouvement de la roue soit le roulement, soit le glissement, soit le dérapage.

6. Procédé selon la revendication 5, dans lequel, dans le cas où aussi bien la distance (D1SK) entre la zone de contact (GER) et le point caractéristique (P1SK) de la zone partielle (SK) du rail (SCH) que la distance (D1RDLF) entre la zone de contact (GER) et le point caractéristique (P1RDLF) de la zone partielle (RDLF) de la roue (RD) varient de manière régulière et dans le même sens, le roulement est déterminé comme état de mouvement de la roue (RD).

7. Procédé selon la revendication 5, dans lequel, dans le cas où la distance (D1RDLF) entre la zone de contact (GER) et le point caractéristique (P1RDLF) de la zone partielle (RDLF) de la roue varie, tandis que la distance (D1SK) entre la zone de contact (GER) et le point caractéristique (P1SK) de la zone partielle (SK) du rail (SCH) reste sensiblement inchangée, on détermine le dérapage comme état de mouvement de la roue (RD).

8. Procédé selon la revendication 5, dans lequel, dans le cas où la distance (D1SK) entre la zone de contact (GER) et le point caractéristique (P1SK) de la zone partielle (SK) du rail (SCH) varie, tandis que la distance (D1RDLF) entre la zone de contact (GER) et le point caractéristique (P1RDLF) de la zone partielle (RDLF) du rail (SCH) reste sensiblement inchangée, on détermine le glissement comme état de mouvement de la roue (RD).

9. Procédé selon l'une quelconque des revendications précédentes, dans lequel, tant du côté de la zone partielle (SK) du rail (SCH) que du côté de la zone partielle (RDLF) de la roue (RD), une pluralité de points caractéristiques (P1SK, P2SK, P3SK, P1RDLF, P2RDLF, P3RDLF) est utilisée afin d'affiner l'analyse de l'état de mouvement par le biais de modifications respectives de la distance (D1SK, D2SK, D3SK, D1RDLF, D2RDLF, D3RDLF) par rapport à la zone de contact (GER) et afin de procéder à des contre-régulations finement - adaptées en conséquence du dérapage comme du glissement sur le véhicule ferroviaire.

10. Procédé selon l'une des revendications précédentes, dans lequel une information relative au mode de fonctionnement déterminé est transmise à une régulation de traction du véhicule ferroviaire et/ou à une régulation de freinage du véhicule ferroviaire, afin de provoquer une contre-régulation respective sur le véhicule ferroviaire.

11. Procédé selon la revendication 10,
- dans lequel, en cas de détection d'un dérapage sur le véhicule ferroviaire, une réduction de la force de traction est effectuée par la régulation de l'entraînement du véhicule ferroviaire, afin de contrecarrer au moins le dérapage, ou
- dans lequel, en cas de détection d'un glissement sur le véhicule ferroviaire, une réduction de la force de traction est effectuée par la régulation de freinage du véhicule ferroviaire, afin de contrecarrer au moins le glissement.

12. Procédé selon la revendication 1, dans lequel les images de la caméra sont utilisées pour la surveillance et/ou l'évaluation de l'état du rail d'une voie ferrée.

13. Procédé selon l'une quelconque des revendications précédentes, dans lequel comme points caractéristiques (P1SK, P1RDLF)
- des dommages, des modifications de la surface, des décolorations de la surface et/ou des structures sur la zone partielle (RDLF) du rail (SCH) ou de la roue (RD) sont utilisés ; ou
- des marquages sont utilisés, qui sont posés sur une zone partielle du rail (SCH), comme sur une zone partielle (RDLF) de la roue (RD).

14. Dispositif pour déterminer l'état de mouvement d'une roue (RD) d'un véhicule ferroviaire (SFZ),
- avec une roue (RD) d'un véhicule ferroviaire (SFZ) et avec un rail (SCH) sur lequel circule la roue (RD) du véhicule ferroviaire (SFZ),
- avec une caméra (KAM) placée sur le véhicule ferroviaire (SFZ) et focalisée sur une zone roue-rail,
- dans lequel la caméra est conçue de telle sorte que des images successives de la zone roue-rail sont enregistrées sous forme de séquence d'images, la zone roue-rail contenant au moins une zone partielle (RDLF) d'une roue (RD) du véhicule ferroviaire (SFZ) ainsi qu'au moins une zone partielle (SK) d'un rail (SCH) sur lequel doit rouler la roue (RD),
- et avec des moyens d'analyse d'images qui sont conçus pour la mise en œuvre du procédé selon l'une des revendications 1 à 13.
